# EUROPÄISCHE PATENTANMELDUNG

(11) **EP 3 178 638 A1**
(43) Veröffentlichungstag der Anmeldung: **14.06.2017**
(21) Anmeldenummer: 15199680.8
(22) Anmeldetag: 11.12.2015
(51) Int. Cl.: B29C 70/40, B29C 70/08, B29C 70/88, B32B 15/092, B32B 15/14

(54) **VERFAHREN ZUR HERSTELLUNG EINES HALBZEUGS ODER BAUTEILS AUS METALL UND FASERVERBUND**

(71) Anmelder: Voestalpine Stahl GmbH, 4020 Linz (AT); voestalpine Metal Forming GmbH, 3500 Krems an der Donau (AT)
(72) Erfinder: Eyßell, Carola, 4225 Luftenberg (AT); Heinritz, Rüdiger, 73527 Schwäbisch Gmünd (DE); Kelsch, Reiner, 73557 Mutlangen (DE); Mayrhofer, Gerhard, 4121 Altenfelden (AT); Rouet, Christian, 3494 Gedersdorf (AT); Riegler, Johannes, 4611 Buchkirchen (AT)
(74) Vertreter: Jell, Friedrich

(57) **Zusammenfassung**

Es wird ein Verfahren (1, 101) zur Herstellung eines Halbzeugs oder Bauteils (2, 102) gezeigt, bei dem ein Metallträger (3, 103) mit mindestens einem Prepreg (6), aufweisend eine thermisch vernetzbare, duroplastische Matrix mit Endlosfasern, belegt, die duroplastische Matrix des Prepreg (6) durch Erwärmen vorvernetzt und der mit dem vorvernetzten Prepreg (6) belegte Metallträger (3, 103) zu einem Halbzeug oder Bauteil (2, 102) umgeformt wird. Um plastischer Formänderung an faserverstärkten Bereichen des Metallträgers (3, 103) zu ermöglichen, wird vorgeschlagen, dass beim Vorvernetzen der duroplastischen Matrix des Prepregs (6) dessen Matrix in einen ihrem Viskositätsminimum (ηmin) nachfolgenden Viskositätszustand (η) übergeführt und noch vor Erreichen ihres Gelierpunkts (Pc) das Prepreg (6) gemeinsam mit dem Metallträger (3, 103) umgeformt wird.

## Beschreibung

Die Erfindung betrifft ein Verfahren zur Herstellung eines Halbzeugs oder Bauteils, bei dem ein Metallträger mit mindestens einem Prepreg, aufweisend eine thermisch vernetzbare, duroplastische Matrix mit Endlosfasern, belegt, die duroplastische Matrix des Prepregs durch Erwärmen vorvernetzt und der mit dem vorvernetzten Prepreg belegte Metallträger zu einem Halbzeug oder Bauteil umgeformt wird.

Um einen Metallträger, nämlich einen Blechzuschnitt bzw. eine Blechplatine, verstärkt mit Prepregs, die eine duroplastische Matrix mit Endlosfasern aufweisen, möglichst beschädigungsfrei einem Umformverfahren, insbesondere Tiefziehen, unterwerfen zu können, ist es aus dem Stand der Technik bekannt (WO2013/153229A1), die plastischen Verformungen am Metallträger in die beschichtungsfreien Bereiche des Metallträgers zu verlagern. Demnach bestehen beschichtungsfreie Bereiche am Halbzeug oder Bauteil, was solche FVK-verstärkten Halbzeuge bzw. Bauteile hinsichtlich ihres Leichtbaupotentials und damit ihrer Anwendungsmöglichkeiten einschränkt. Hinzu kommt, dass durch diese Flächenbeschränkung auch die Faserlänge der Prepregs eingeschränkt wird, was zu reduzierter Steifigkeit und Festigkeit führen kann. Zudem zeigte sich bei Halbzeugen oder Bauteilen, die aus Blechzuschnitten mit drucklos bis zur Blockfestigkeit ausgehärteten Prepregs tiefgezogen wurden, die Tendenz zur Delamination und/oder zu einer erhöhten Porosität im endvernetzten Faserverbundmaterial - was unter anderem die Reproduzierbarkeit des Verfahrens beeinträchtigt.

Die Erfindung hat sich daher die Aufgabe gestellt, ein Verfahren der eingangs geschilderten Art hinsichtlich seiner Einfachheit, Anwendungsmöglichkeiten und auch in seiner Reproduzierbarkeit zu verbessern. Zudem soll ein Verfahren mit geringer Zykluszeit ermöglicht werden.

Die Erfindung löst die gestellte Aufgabe dadurch, dass beim Vorvernetzen der duroplastischen Matrix des Prepregs dessen Matrix in einen ihrem Viskositätsminimum nachfolgenden Viskositätszustand übergeführt und noch vor Erreichen ihres Gelierpunkts das Prepreg gemeinsam mit dem Metallträger umgeformt wird.

Wird beim Vorvernetzen der duroplastischen Matrix des Prepregs dessen Matrix in einen ihrem Viskositätsminimum nachfolgenden Viskositätszustand übergeführt und noch vor Erreichen ihres Gelierpunkts das Prepreg gemeinsam mit dem Metallträger umgeformt wird, kann dadurch nicht nur eine plastische Formänderung am Metallträger in dessen faserverstärkten Bereichen zugelassen, sondern auch die Reproduzierbarkeit des Verfahrens deutlich verbessert werden. Das sich in diesem Zustand befindliche Prepreg kann nämlich den Umformradien entsprechende, relative Bewegungen zwischen seinen Endlosfasen und dem Metallträger zulassen. Somit kann selbst engen Biegeradien am Blechzuschnitt gefolgt werden, ohne mit einem Bruch oder einer Delamination rechnen zu müssen. Das erfindungsgemäße Verfahren ist daher besonders vielseitig anwendbar. Überraschend konnte zudem erreicht werden, dass durch das gemeinsame Umformen das Kompaktieren des Matrixmaterials mit der Faserstruktur der Endlosfasern erheblich verbessert werden kann. Die vergleichsweise kurze Kraftbeaufschlagung, insbesondere Druckbeaufschlagung, beim Umformen kann genutzt werden, die Porosität im Faserverbund zu verringern - womit die Laminatqualität erhöhbar und die Gefahr einer Delamination der Faserverstärkung am Blechzuschnitt weiter reduzierbar ist. Erfindungsgemäß kann daher durch das Überführen der Matrix in einen ihrem Viskositätsminimum nachfolgenden Viskositätszustand und dem Umformen des Prepregs gemeinsam mit dem Metallträger noch vor Erreichen des Gelierpunkts der Matrix die Reproduzierbarkeit des Verfahren erheblich verbessert werden. Zudem ist es möglich, durch das gemeinsame Umformen von Prepreg und Metallträger einen besonders schnellen Verfahrensablauf mit geringer Zykluszeit zu Verfügung zu stellen. Außerdem bedarf es das erfindungsgemäße Verfahren im Vergleich mit anderen bekannten Verfahren zur Herstellung von Faserverbund-Halbzeugen oder -Bauteilen keiner aufwendigen und/oder komplex handhabbaren Anlagentechnik - was neben einer Reduzierung der Kosten für das erfindungsgemäße Verfahren auch eine Verbesserung seiner Reproduzierbarkeit bedeutet.

Im Allgemeinen wird erwähnt, dass der Metallträger aus Blechen mit einem Eisen-, Aluminium- oder Magnesiumwerkstoff, aus einem Leichtmetall oder dergleichen bzw. aus Legierungen aus diesen bestehen kann. Als Metallträger kann sich ein Stahlblech mit oder ohne Schutzschicht, beispielsweise auf Zinkbasis, auszeichnen. Im Allgemeinen wird weiter erwähnt, dass die duroplastische Kunststoffmatrix eine Kombination mit anorganischen oder organischen Verstärkungsfasern, wie z. B. Glas, Basalt, Kohlenstoff oder Aramid aufweisen kann. Zudem ist das Belegen des Metallträgers mit mehreren Prepregs nebeneinander als auch eine Stapelung von Prepregs (einlagig oder mehrlagig) auf dem Metallträger denkbar. Die im Prepreg enthaltenen Fasern können als reine unidirektionale Schicht vorliegen. Damit kann mit mehrlagigen Prepregs ein unidirektionales oder multidirektionales Laminat am Metallträger geschaffen werden.
Außerdem wird im Allgemeinen festgehalten, dass eine duroplastische Kunststoffmatrix auch modifizierte duroplastische Polymerblends aufweisen kann, welche vorzugsweise aus nicht zwangsweise miteinander vernetzten Phasen aus Epoxid- und Polyurethanphasen bestehen. Bekannte prozentuale Zusammensetzungen solch eines PU-Epoxy-Blends sind, beispielsweise 5 bis 25 Teile primärer Polyurethanphase in umgebender Epoxymatrix.
Im Allgemeinen wird weiter erwähnt, dass zur Bestimmung der Viskosität der Matrix unter anderem ein Rheometer (beispielsweise ein Viskosimeter Anton Paar MCR 301 unter Oszillation) herangezogen werden kann.

Um die Gefahr eines unerwünschten Ausquetschens aus dem Prepreg der über dem Viskositätsminium erwärmten duroplastischen Matrix beim Umformen zu reduzieren, kann vorgesehen sein, dass vor dem Umformen der Vernetzungsgrad der duroplastischen Matrix auf 4 bis 15 % eingestellt wird.

Besonders vorteilhaft kann sein, wenn beim Umformen der Vernetzungsgrad der duroplastischen Matrix auf 20 bis 45 % eingestellt wird. Dadurch ist nämlich die Gefahr eines unerwünschten Ausquetschens der duroplastischen Matrix beim Umformen zusätzlich reduzierbar. Auch kann bei solch einem Vernetzungsgrad die Druckbelastung auf das Prepreg beim Umformen für optimale Bedingungen zur Erreichung einer erhöhten Laminatqualität des Prepregs sorgen. Zudem kann dies auch der Haftfestigkeit zwischen den Werkstoffpartnern dienlich sein.

Besonders vorteilhaft kann sein, wenn beim Umformen der Vernetzungsgrad der duroplastischen Matrix auf 25 bis 40 % eingestellt wird.

Wird beim Umformen die duroplastische Matrix auf 120 bis 220°C erwärmt, kann die Vernetzung beschleunigt werden - womit das Umformen schneller erfolgen kann bzw. die Zykluszeit des Verfahrens verringert werden.

Besonders vorteilhaft kann sein, wenn beim Umformen die duroplastische Matrix auf 150 bis 180°C erwärmt wird.

Ein unerwünschtes Abkühlen des erwärmten Prepregs - und somit eine für das erfindungsgemäße Verfahren nachteilige Änderung der Temperatur - kann verhindert werden, wenn das Umformwerkzeug erwärmt und der Metallträger mit dem erwärmten Umformwerkzeug umgeformt wird. Auf diese Weise ist die Reproduzierbarkeit des Verfahrens weiter erhöhbar. Es wird festgehalten, dass zu diesem Zweck die Temperatur des Umformwerkzeugs von der Temperatur des Prepregs bzw. seiner Matrix abweichen kann. Vorstellbar ist weiter, dass die Werkzeuge des Umformwerkzeugs unterschiedliche Temperaturen aufweisen, um den Metallträger gezielt bereichsspezifisch zu temperieren oder einen Temperaturgradienten im Laminat einzustellen.

Die Zykluszeiten zum Umformen können reduziert werden, wenn das Prepreg nach dem gemeinsamen Umformen mit dem Metallträger drucklos gehärtet wird - und aufgrund dessen das Umformwerkzeug besonders rasch wieder entfernt werden kann.

Dadurch, dass vor dem oder beim Belegen des Metallträgers mit dem Prepreg eine Zwischenschicht auf den Metallträger aufgebracht wird, über die das Prepreg an den Metallträger angebunden wird, kann einerseits die Haftfestigkeit verbessert, andererseits auch ausgleichend auf thermische Spannungen eingewirkt werden. Diese Zwischenschicht sollte zumindest in jenem Bereich des Metallträgers vollflächig aufgebracht werden, der auch mit Prepreg belegt wird.
Die Schichtdicke der Zwischenschicht kann bevorzugt von 50 µm bis 1000 µm betragen, bevorzugt sind Schichtdicken von 80 µm bis 700 µm. Dickere Schichten, bevorzugt Schichtdicken von 500 µm bis 1000 µm können sich dadurch auszeichnen, dass diese zudem einen Schutz vor Korrosion bieten (Sperrschicht). Bei Anwendungen mit hohen Steifigkeitsanforderungen sind dünne Filme bevorzugt (bevorzugt <150 µm). Des Weiteren ist die Verarbeitungszeit, d. h. die Reaktionszeit relevant - was vor allem bei kürzeren Zykluszeiten zu beachten ist. Hierbei hat sich gezeigt, dass Zwischenschichten auf Basis von Polyethylen, Polypropylen und/oder mit Polyamid-Kern oder auch Zwischenschichten auf Co-Polyamid-Basis besonders gut geeignet sein können. Dies können beispielsweise Systeme der Firma Nolax, nämlich Produkte Cox 391, Cox 422, Cox 435, Systeme der Firma Evonik, nämlich das Produkt Vestamelt X1333-P1 oder Systeme der Firma Hexcel, nämlich die Produkte TGA25.01 A bzw. DLS 1857 sein.

Um eine hohe Laminatqualität zu garantieren, kann vorgesehen sein, dass die Matrix des Prepregs beim Umformen mit einer Druckkraft belastet wird. Solch eine Druckbelastung kann beispielsweise erzeugt werden, wenn der mit Prepreg belegte und als Blech ausgebildete Metallträger durch Tiefziehen oder Strecktiefziehen umgeformt wird. Der Metallträger kann, beispielsweise durch Querspalten eines Metallbands erzeugt, auch als flaches Blech oder Platine ausgebildet sein.

Eine Faltenbildung bzw. ein Faserverzugs am Prepreg kann verhindert werden, wenn das Prepreg beim Umformen bereichsweise am Metallträger niedergehalten und dadurch dort am Metallträger fixiert wird. Durch diese lokale Fixierung von begrenzten Bereichen des mit Prepreg belegten Metallträgers, was beispielsweise mit Hilfe eines Matrizeneinsatzes erfolgen kann, kann beispielsweise das Prepreg entsprechend der jeweiligen Ausrichtung dessen Endlosfasern eine Beweglichkeit in anderen Richtungen zugelassen werden. Hierzu ist auch denkbar, dass das Umformwerkzeug eine Vielzahl an solchen Niederhaltern aufweist. Ein derartiger Niederhalter kann auch durch eine lokale Werkzeugspaltreduktion beispielsweise zwischen Matrize und Stempel geschaffen werden.

Die Gefahr einer Faltenbildung bzw. eines Faserverzug kann weiter reduziert werden, wenn das Prepreg beim Umformen im umformenden Eingriff mit nacheinander wirkenden Segmenten oder Gruppen von Segmenten einer Matrize und/oder eines Stempels eines Umformwerkzeugs steht. Damit kann ein verzögertes Wirken des Umformwerkzeugs auf das Prepreg erreicht werden - wodurch das Prepreg den plastischen Formänderungen des Metallträgers verbessert folgen kann.

Erweitert sich der Eingriffsbereich im Laufe des Umformvorgangs segmentweise oder gruppensegmentweise zu einem Rand des Metallträgers hin, können auf elegante Weise eventuelle Falten am Prepreg oder darin enthaltene Lufteinschlüsse in Richtung des Rands des Metallträgers ausgepresst werden. Mit Hilfe des Umformwerkzeugs kann damit beispielsweise auf ein nachträgliches Glattstreichens des Prepregs verzichtet werden.

Auch ist vorstellbar, diese Druckbelastung auf das Prepreg auszuüben, indem der als Spaltband ausgebildete Metallträger rollprofiliert wird. Solch ein Metallträger kann, beispielsweise durch Längsspalten eines Metallbands erzeugt, auch als flaches Spaltband ausgebildet sein, um ein Drapieren zu vermeiden.

Einer Falten- und/oder Blasenbildung am Prepreg, die sich im Zuge des Rollprofilierens ausbilden kann, kann erfolgreich entgegengewirkt werden, wenn nach dem Rollprofilieren des Metallträgers das Prepreg nochmals an den Metallträger angedrückt wird. Dies kann beispielsweise mithilfe von Rollenpaaren erfolgen.

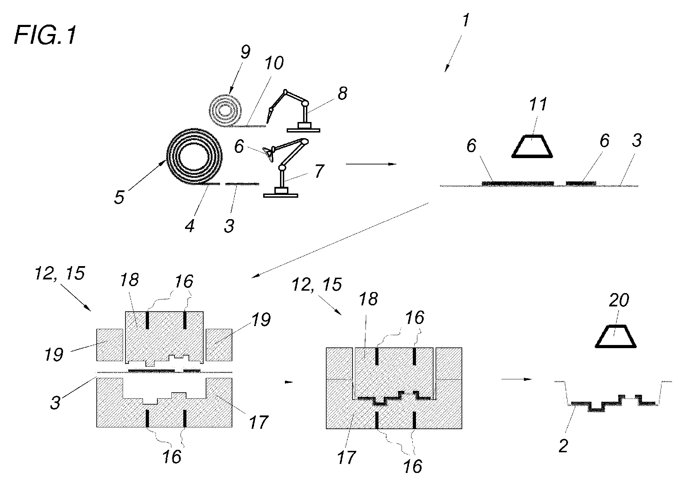

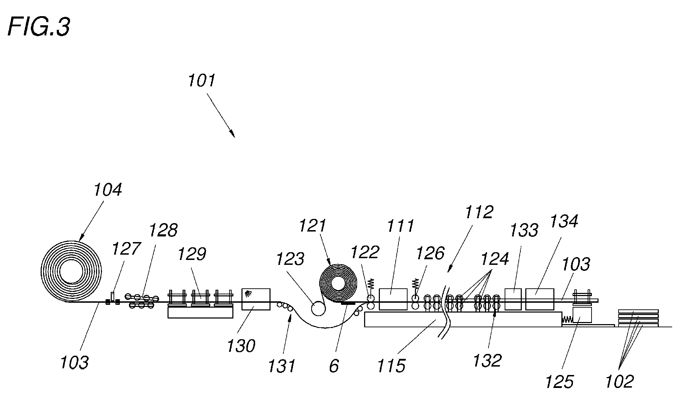

In den Figuren wird beispielsweise das erfindungsgemäße Verfahren zur Herstellung eines Halbzeugs oder Bauteils anhand mehrerer Varianten näher dargestellt.
Es zeigen
- Fig. 1: eine erste Variante zum Ablauf des erfindungsgemäßen Verfahrens, bei welchem ein Tiefziehwerkzeug zum Umformen eines mit einem Prepreg verbundenen Metallträgers eingesetzt wird,
- Fig.: 2 eine abgerissene und vergrößerte Schnittansicht auf ein gemäß dem Verfahren nach Fig. 1 hergestelltes Halbzeug,
- Fig.: 3 eine zweite Variante zum Ablauf des erfindungsgemäßen Verfahrens, bei welchem ein Gerüst einer Walzprofilieranlage zum Umformen eines mit einem Prepreg verbundenen Metallträgers verwendet wird und
- Fig.: 4 eine von der Zeit abhängige Darstellung zur Viskosität und dem Vernetzungsgrads der Matrix des in den Verfahren nach Fig. 1 und 3 jeweils verwendeten Prepregs.

Gemäß dem nach Fig. 1 dargestellten Ablauf des erfindungsgemäßen Verfahrens 1 zur Herstellung eines Bauteils 2 wird im ersten Schritt ein als Blechzuschnitt ausgeführter Metallträger 3, nämlich eine Platine, von einem Metallband 4 eines Coils 5 durch Querspalten erzeugt. Der Metallträger 3 wird auf einer Flachseite, die mit Prepreg 6 zu belegen ist, zuvor eventuell noch gereinigt und/oder chemisch vorbehandelt - was allerdings nicht näher dargestellt ist. Anschließend wird der Metallträger 3 mithilfe eines Roboters 7 mit mehreren Prepregs 6 belegt. Der Metallträger 3 kann hierzu eventuell vorerwärmt werden.

Zum Zuschneiden des Prepregs 6 ist beispielsweise ein Roboter 8 mit nicht näher dargestellten Schneidvorrichtungen, beispielsweise mit einer ultraschallerregten Schneide, vorgesehen, der dieses von einem, mit Kunststoffmatrix vorimprägnierten, zu einer Rolle 9 aufgewickelten Gewebe/Gelege/Geflecht/Gestrick/Gewirk etc. 10 (FVK) abtrennt. Das Gewebe/Gelege/Geflecht/Gestrick/Gewirk etc. 10 aus Endlosfasern ist im Ausführungsbeispiel bereits mit einer thermisch vernetzbaren, duroplastischen Matrix imprägniert.
Es ist aber auch im Allgemeinen vorstellbar - jedoch nicht dargestellt -, dass der Metallträger 3 mit vorkonditionierten Prepregs 6 belegt wird, zum Beispiel automatisiert, wie in Fig. 1 dargestellt, und/oder von Hand. Diese Prepregs 6 können - beispielsweise zu einem Stack gestapelt - bereits in ihren Abmessungen, in der Dichte, in der Anzahl an Lagen und/oder mit einer Zwischenschicht usw. vorkonditioniert sein.

Nach diesem Belegen wird der damit belegte Metallträger 3 mithilfe einer Wärmequelle 11 bestrahlt - und dadurch die Vernetzung der Matrix gezielt eingestellt. Diese Vernetzung der Matrix erfolgt drucklos und wird bei Verwendung eines vorimprägnierten Gewebe/Gelege/Geflecht/Gestrick/Gewirk etc. 10 durch dessen Erwärmen von 80°C bis 200°C, bevorzugt 100°C bis 180°C, mit einer Aufheizrate von 1 bis 40°C/min, bevorzugt 5 bis 25 °C/min, durchgeführt - um damit einen Vernetzungsgrad α vor dem Umformen von 4 bis 15 % einzustellen. Anstatt der als IR oder NIR Strahler dargestellten Wärmequelle 11 ist beispielsweise auch ein Durchlaufofen vorstellbar, was im Ausführungsbeispiel allerdings nicht näher dargestellt ist.

Anschließend wird der belegte Metallträger 3 in ein Umformwerkzeug 12 eingebracht und umgeformt.

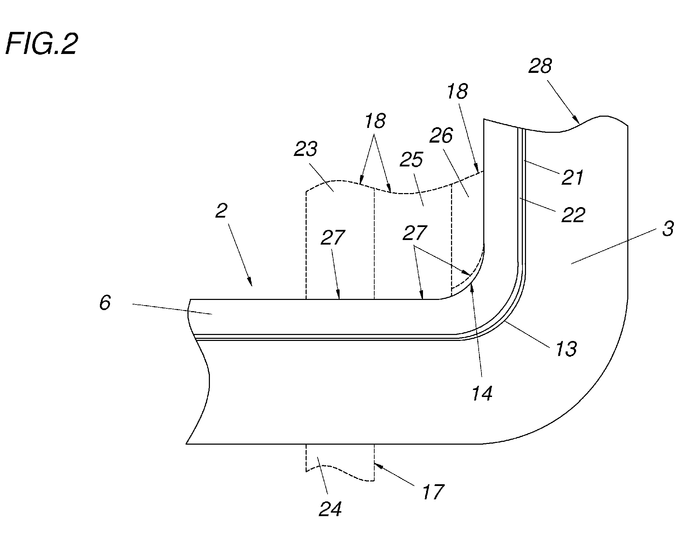

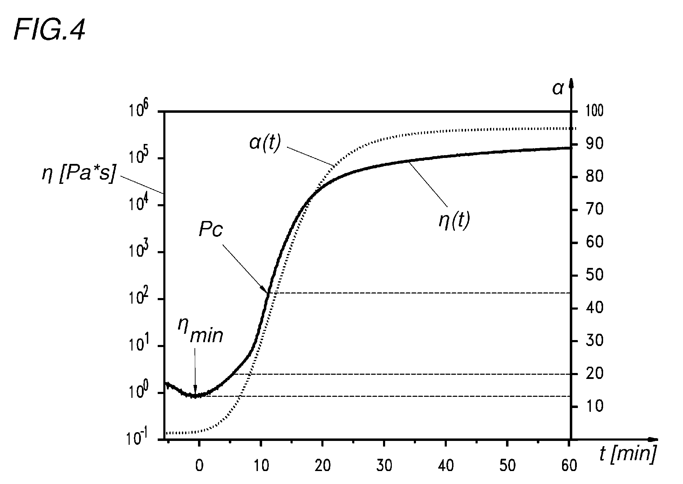

Erfindungsgemäß erfolgt dieses Umformen in Abstimmung mit der Vorvernetzung der duroplastischen Matrix des Prepregs 6, wie dies der Fig. 4 zu entnehmen ist. Hierzu wird diese Matrix in einen ihrem Viskositätsminimum ηₘᵢₙ nachfolgenden Viskositätszustand η übergeführt und noch vor Erreichen ihres Gelierpunkts Pc gemeinsam mit dem Metallträger 3 mithilfe des Umformwerkzeugs 12 umgeformt. Das Umformwerkzeug 12 wird zu diesem Zweck von einer offenen in eine geschlossene Stellung übergeführt. Die vorteilhafte Mitumformung der duroplastischen Matrix mit dem Metallträger 3 ist erfindungsgemäß möglich, da das sich im beschriebenen, erfindungsgemäßen Zustand verwendete Prepreg 6 den plastischen Formänderungen durch das Umformen folgen kann. Die Endlosfasen des Prepregs 6 sind nämlich noch gegenüber dem Metallträger 3 relativ im Prepreg 6 beweglich. Die Matrix des Prepreg 6 befindet sich in einem ihrem Viskositätsminimum ηₘᵢₙ nachfolgenden Viskositätszustand η, wodurch ein Bruch der Endlosfasern bzw. eine Delamination der Faserverstärkung am Metallträger 3 beim Umformen nicht eintritt - wie dies in Fig. 2 näher zu erkennen ist. Erfindungsgemäß ist damit eine gemeinsame Umformung mit Biegeradien 13 am Metallträger 3 in dessen von Prepreg 6 freien Bereichen als auch in seinen mit Prepreg 6 belegten Bereichen 14 möglich.

Die Darstellung nach Fig. 4 bezieht sich auf ein folgendes Faserverbundmaterial:

| | |
|---|---|
| Metallträger: | Stahlblech: Blechdicke 0,81 mm |
| Laminat: | unidirektional, vier Lagen von Prepreg |
| Prepreg: | Endlosfasern mit einem Faseranteil von 57% in der Matrix Dicke: 0,22 mm |
| Matrix: | duroplastische Basis (SGL Type E201: modifiziertes Epoxidharzsystem) |
| | ηₘᵢₙ= 0,9 Pa*s |
| | Pc = 45% |
| Zwischenschicht: | 100 µm Polypropylen |

Der Vernetzungsgrad α der Matrix wurde mittels Differential Scanning Calorimetry (DSC) bestimmt.

Nach Fig. 1 ist beispielsweise ein Tiefziehwerkzeug 15 als Umformwerkzeug 12 dargestellt, um damit den belegten Metallträger 3 umzuformen bzw. tiefzuziehen. Es ist aber auch durchaus vorstellbar, dass der Metallträger 3 mit einem nicht dargestellten Umformwerkzeug einem kombinierten Streck- und Tiefziehen unterworfen wird.

Um die Gefahr eines Ausquetschens der duroplastischen Matrix des Prepregs 6 beim Umformen zu reduzieren, wird diese Matrix wie erwähnt auf 4 bis 15 % vorvernetzt, bevor das Umformwerkzeug 12 auf das Prepreg 6 Kräfte ausübt - was wie in Fig. 1 dargestellt eintritt, wenn das Umformwerkzeug 12 von seiner offenen in dessen geschlossenen Stellung übergeführt wird.

Im beheizten Umformwerkzeug 12 wird der Vernetzungsgrad α der Matrix ausgehend von 4 bis 15 % vor dem Umformen auf 20 bis 45 % beim Umformen eingestellt, welche Grenzen 20 bis 45 % strichliert der Fig. 4 eingezeichnet wurden. Danach wird das Bauteil 2 dem Umformwerkzeug 12 entnommen. Vorzugsweise erfolgt die Entnahme des Bauteils 2 aus dem Umformwerkzeug 12 bei oder nach Erreichen des Gelierpunkts der jeweiligen Matrix. Dies ermöglicht bei ähnlicher Laminatqualität am Prepreg 6 eine stark verkürzte Zykluszeit gegenüber bekannten Verfahren und stellt die ausreichende Eigenstabilität des Matrixsystems mit den Fasern sicher.

Mit einem erwärmten, also gezielt temperierten Umformwerkzeug 12 kann zudem sichergestellt werden, dass beim Umformen die duroplastische Matrix auf einer Temperatur von 120 bis 220°C gehalten wird, um das Bauteil 2 dem Umformwerkzeug durch schnellere Vernetzung früher entnehmen und das Verfahren so verkürzen zu können. Vielfach konnte sich eine Temperatur von 150 bis 180°C auszeichnen. Zum Beheizen des Umformwerkzeugs 12 bzw. Tiefziehwerkzeugs 15 weist dieses eine elektrische Heizung 16 auf, die Matrize 17 und Stempel 18 des Umformwerkzeugs 12 erwärmt. Eine Heizung für den Niederhalter 19 ist nicht dargestellt, was aber ebenso vorstellbar ist. Beispielsweise kann durch unterschiedlich temperierte Bereiche ein Temperaturgradient in der Matrix bzw. am Prepreg 6 eigestellt werden, um physikalische und chemische Parameter - wie beispielswese Haftfestigkeit, Viskositätszustand n etc. - genau einstellen zu können.

Nach dem Umformen wird das Bauteil 2 dem Umformwerkzeug 12 entnommen und die Matrix des Prepregs 6 außerhalb des Umformwerkzeugs 12 drucklos weiter gehärtet - und zwar mit einer weiteren Wärmequelle 20, die nach Fig. 1 zu erkennen ist. Hierzu ist unter anderem wiederum ein nicht dargestellter Durchlaufofen vorstellbar. Vorzugsweise wird diese weitere Aushärtung durch die Wärmequelle 20 mit einer Temperatur von 100 bis 200 Grad Celsius (°C) durchgeführt, um damit beispielsweise Eigenspannungen durch das anschließende Abkühlen bei Raumtemperatur zu reduzieren. Vielfach konnte sich eine Temperatur von 120 bis 150 °C

Der zu belegende Metallträger 3 weist unter anderem auch eine Schutzbeschichtung 21, beispielsweise eine Zink- oder Zinklegierungsschicht, auf - wie diese nach Fig. 2 erkannt werden kann. Auf diese Schutzbeschichtung 21 bzw. auf die Flachseite des Metallträgers 3 wird im mit Prepreg 6 vollflächig belegten Bereich eine Zwischenschicht 22 aufgebracht. Diese Zwischenschicht 22 wird durch Auftragen eines Polyamid-basierten Haftvermittlers auf den Metallträger 3 erzeugt. Über diese Zwischenschicht 22 kann das Prepreg 6 an den Metallträger 3 äußerst fest und spannungsarm angebunden werden.

Das Prepreg 6 wird beim Umformen bereichsweise am Metallträger 3 niedergehalten und auf diese Weise dort am Metallträger 3 fixiert - wie dies in der Fig. 2 angedeutet ist. Das Segment 23 der Matrize 17 drückt das Prepreg 6 an den Metallträger 3 an, welcher durch einen beispielsweise dargestellten Gegenhalter 24 der Matrize 17 in diesem Bereich stabilisiert wird. Faltenbildung bzw. Faserverzug am Prepreg wird auf diese Weise vermieden.

Auch steht das Prepreg 6 beim Umformen im umformenden Eingriff mit nacheinander wirkenden Segmenten 25, 26 der Matrize 17 des Umformwerkzeugs 12. Dies kann in Fig. 2 daran erkannt werden, dass ein Segment 26 der Matrize 17 im Gegensatz zu Segment 25 noch nicht vollflächig am Prepreg 6 anliegt. Zudem ist an der Abfolge der Segmente 25, 26 zu erkennen, dass sich der Eingriffsbereich 27 im Laufe des Umformvorgangs segmentweise zum Rand 28 des Metallträgers 3 hin erweitert. Damit kann über das segmentierte Umformwerkzeug 12 eine Art Glattstreichen des Prepregs beim Umformen ermöglicht werden, was die Ausbildung von Falten und Lufteinschlüssen am Prepreg reproduzierbar ausschließt.

Gemäß dem nach Fig. 3 dargestellten alternativen Ablauf zum erfindungsgemäßen Verfahren 101 sind zur Herstellung eines Bauteils 102 Gerüste 115 einer Walzprofilieranlage als Umformwerkzeug 112 dargestellt.
Auch hier wird ein auf einem Träger 121 vorgesehenes Prepreg 6, was hinsichtlich der Größen unverhältnismäßig dargestellt ist, auf einen als Spaltband 104 ausgeführten Metallträger 103 aufgebracht - welches Spaltband 104 aus einem nicht näher dargestellten Coil durch Längsspalten/-teilen erzeugt wird. Der Metallträger 103 wird samt Träger 121 und Prepreg 6 durch ein Andrückrollenpaar 122 geführt, wonach der Träger 121 am Metallträger 103 verbleibt. Das Prepreg 6 kann auf der oberen und/oder unteren Seite mit einer Schutzfolie 123 belegt sein. Vor dem Aufbringen des Prepregs 6 wird mindestens die Schutzfolie 123, auf der dem Träger 121 zugewandten Seite des Prepregs 6, abgezogen und aufgerollt. Nachfolgend wird der Metallträger 103 mit dem Prepreg 6 belegt.

Der sohin belegte Metallträger 103 wird anschließend durch einen Durchlaufofen 111 geführt - das Erwärmen führt zu einer Vorvernetzung der duroplastischen Matrix des Prepregs 6. Erfindungsgemäß wird auch hier bei diesem Vorvernetzen die duroplastische Matrix in einen ihrem Viskositätsminimum ηₘᵢₙ nachfolgenden Viskositätszustand η übergeführt und das Prepreg 6 noch vor Erreichen des Gelierpunkts Pc seiner Matrix gemeinsam mit dem Metallträger 103 durch zusammenwirkende Rollen 124 der Gerüste 115 der Walzprofilieranlage umgeformt. Auch hier treten durch den speziellen Zustand des Prepregs 6 beim Umformen die zu den Figuren 1 und 2 beschriebenen Vorteile ein - beispielsweise, indem damit reproduzierbar mit Prepreg 6 belegte Halbzeuge oder Bauteile 102 mit einer kurzen Zykluszeit herstellbar sind.

Mit einer den Gerüsten 115 nachfolgenden fliegenden Trenneinrichtung 125 wird der umgeformte Metallträger 103 zu Bauteilen 102 abgelängt.

Diese abgelängten Bauteile 102 können noch einer weiteren drucklosen Vernetzung unterworfen werden, was nicht näher dargestellt ist.

Nach dem Durchlaufofen 111, kann noch - zur Verbesserung der Laminatqualität am Prepreg 6 - ein Kompaktierungsrollenpaar 126 vorgesehen sein, welches das Prepreg 6 druckbelastet.

Die Walzprofilieranlage weist nach einer üblichen Bandvorbereitung, die mit Hilfe einer eine Bandschweißanlage 127 und einer Richtmaschine 128 durchgeführt wird, noch eine Vorlaufstanze 129 auf, mit welcher der Metallträger 103 gelocht und/oder verprägt wird. Anschließend fährt das Band in die Bandreinigung 130, wo vorzugsweise jene Flächen, die mit Prepregs 6 zu versehen sind, vorgereinigt werden. Nach der Schlingengrube 131 wird Prepreg 6, beispielsweise in Streifenform, aufgebracht. Zudem ist in der Fig. 3 zu erkennen, dass nach dem Umformen eine Kalibrierung 132 erfolgt und anschließen eine optionale Faltenglättung 133 durchgeführt wird. Diese Faltenglättung 133 kann beispielsweise mit Hilfe von gegenüberliegenden Rollen erfolgen, zwischen denen der rollprofilierte Metallträger 103 geführt, das Prepreg 6 nochmals an den Metallträger 103 andrücken. Anschließend kann die Vernetzung über eine weitere Wärmequelle 134 initiiert wird.

## Patentansprüche

1. Verfahren zur Herstellung eines Halbzeugs oder Bauteils (2, 102), bei dem
ein Metallträger (3, 103) mit mindestens einem Prepreg (6), aufweisend eine thermisch vernetzbare, duroplastische Matrix mit Endlosfasern, belegt,
die duroplastische Matrix des Prepregs (6) durch Erwärmen vorvernetzt und der mit dem vorvernetzten Prepreg (6) belegte Metallträger (3, 103) zu einem Halbzeug oder Bauteil (2, 102) umgeformt wird,
**dadurch gekennzeichnet, dass**
beim Vorvernetzen der duroplastischen Matrix des Prepregs (6) dessen Matrix in einen ihrem Viskositätsminimum (ηₘᵢₙ) nachfolgenden Viskositätszustand (n) übergeführt und noch vor Erreichen ihres Gelierpunkts (Pc) das Prepreg (6) gemeinsam mit dem Metallträger (3, 103) umgeformt wird.

2. Verfahren nach Anspruch 1, **dadurch gekennzeichnet, dass** vor dem Umformen der Vernetzungsgrad (α) der duroplastischen Matrix auf 4 bis 15 % eingestellt wird.

3. Verfahren nach Anspruch 1 oder 2, **dadurch gekennzeichnet, dass** beim Umformen der Vernetzungsgrad (α) der duroplastischen Matrix auf 20 bis 45 % eingestellt wird.

4. Verfahren nach Anspruch 3, **dadurch gekennzeichnet, dass** beim Umformen der Vernetzungsgrad (α) der duroplastischen Matrix auf 25 bis 40 % eingestellt wird.

5. Verfahren nach einem der Ansprüche 1 bis 4, **dadurch gekennzeichnet, dass** beim Umformen die duroplastische Matrix auf 120 bis 220°C erwärmt wird.

6. Verfahren nach Anspruch 5, **dadurch gekennzeichnet, dass** beim Umformen die duroplastische Matrix auf 150 bis 180°C, erwärmt wird.

7. Verfahren nach einem der Ansprüche 1 bis 6, **dadurch gekennzeichnet, dass** das Umformwerkzeug (12, 112) erwärmt und der Metallträger (3, 103) mit dem erwärmten Umformwerkzeug (12, 112) umgeformt wird.

8. Verfahren nach einem der Ansprüche 1 bis 7, **dadurch gekennzeichnet, dass** das Prepreg (6) nach dem gemeinsamen Umformen mit dem Metallträger (3, 103) drucklos gehärtet wird.

9. Verfahren nach einem der Ansprüche 1 bis 8, **dadurch gekennzeichnet, dass** vor dem oder beim Belegen des Metallträgers (3, 103) mit dem Prepreg (6) eine Zwischenschicht (22) auf den Metallträger (3, 103) aufgebracht wird, über die das Prepreg (6) an den Metallträger (3, 103) angebunden wird.

10. Verfahren nach einem der Ansprüche 1 bis 9, **dadurch gekennzeichnet, dass** der mit Prepreg (6) belegte und als Blech ausgebildete Metallträger (3) durch Tiefziehen oder Strecktiefziehen umgeformt wird.

11. Verfahren nach Anspruch 10, **dadurch gekennzeichnet, dass** das Prepreg (6) beim Umformen bereichsweise am Metallträger (3) niedergehalten und dadurch dort am Metallträger (3) fixiert wird.

12. Verfahren nach Anspruch 10 oder 11, **dadurch gekennzeichnet, dass** das Prepreg (6) beim Umformen im umformenden Eingriff mit nacheinander wirkenden Segmenten (23, 25, 26) oder Gruppen von Segmenten (24, 25, 26) einer Matrize (17) und/oder eines Stempels (18) des Umformwerkzeugs (12) steht.

13. Verfahren nach Anspruch 12, **dadurch gekennzeichnet, dass** sich der Eingriffsbereich (27) im Laufe des Umformvorgangs segmentweise oder gruppensegmentweise zu einem Rand des Metallträgers (3) hin erweitert.

14. Verfahren nach einem der Ansprüche 1 bis 9, **dadurch gekennzeichnet, dass** der als Spaltband ausgebildete Metallträger (103) rollprofiliert wird.

15. Verfahren nach Anspruch 14, **dadurch gekennzeichnet, dass** nach dem Rollprofilieren des Metallträgers (103) das Prepreg (6) nochmals an den Metallträger (103) angedrückt wird.
